Europäisches Patentamt

European Patent Office

Office européen des brevets

(19)

(11) **EP 1 576 030 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(21) Anmeldenummer: **03813127.2**

(22) Anmeldetag: **16.12.2003**

(51) Int Cl.:
***C08G 65/28*** *(2006.01)*     ***C08G 65/20*** *(2006.01)*
***C08G 65/26*** *(2006.01)*

(86) Internationale Anmeldenummer:
**PCT/EP2003/014284**

(87) Internationale Veröffentlichungsnummer:
**WO 2004/055094 (01.07.2004 Gazette 2004/27)**

(54) **VERFAHREN ZUR HERSTELLUNG VON TETRAHYDROFURAN-COPOLYMEREN**

METHOD FOR THE PRODUCTION OF TETRAHYDROFURAN COPOLYMERS

PROCEDE DE PRODUCTION DE COPOLYMERES DE TETRAHYDROFURANE

(84) Benannte Vertragsstaaten:
**AT BE BG CH CY CZ DE DK EE ES FI FR GB GR HU IE IT LI LU MC NL PT RO SE SI SK TR**

(30) Priorität: **18.12.2002 DE 10259136**

(43) Veröffentlichungstag der Anmeldung:
**21.09.2005 Patentblatt 2005/38**

(73) Patentinhaber: **BASF Aktiengesellschaft
67056 Ludwigshafen (DE)**

(72) Erfinder:
• **HAUBNER, Martin
69124 Eppelheim (DE)**
• **PINKOS, Rolf
67098 Bad Dürkheim (DE)**

(56) Entgegenhaltungen:
**EP-A- 0 158 229**      **EP-A- 0 503 392**
**JP-A- 10 087 812**

EP 1 576 030 B1

**Beschreibung**

Die vorliegende Erfindung betrifft ein neues Verfahren zur Herstellung von Polyoxyalkylenglykolen (Polyalkylenetherglykolen) durch Copolymerisation von Tetrahydrofuran und alpha, omega-Diolen in Gegenwart einer Heteropolysäure und eines Kohlenwasserstoffs, bei dem aus der Copolymerisation ein Gemisch aus Wasser und diesem Kohlenwasserstoff abdestilliert wird und nach vollendeter Copolymerisation, wasser zugegeben werden.

Polyoxyalkylenglykole sind wichtige Ausgangsstoffe für die Herstellung von elastischen Fasern, elastischen Konstruktionswerkstoffen und Beschichtungen. Man stellt sie durch Polymerisation von Tetrahydrofuran (im Folgenden als "THF" bezeichnet) oder durch Copolymerisation von THF mit Oxiranen wie Ethylenoxid oder Propylenoxid oder mit alpha, omega-Diolen in Gegenwart kationischer Katalysatoren her. Es ist beispielsweise aus EP-A 126 471 bekannt, als Katalysatoren Heteropolysäuren zu verwenden. Durch dieses Verfahren werden Polyalkylenetherglykole einstufig zugänglich, während man nach anderen Verfahren zunächst die Ester der Polyoxyalkylenglykole erhält, die vor ihrer Verwendung auf dem Gebiet der Polymeren noch zu den Polyoxyalkylenglykolen hydrolysiert werden müssen.

Die Bestimmung eines bestimmten Ziel-Molekulargewichts bei der Heteropolysäurekatalysierten THF-Polymerisation durch Kontrolle der Menge und entsprechendes Zudosieren der im Polymerisationssystem befindlichen Menge an Protonen-liefernden Verbindungen wie Wasser im Verlauf der Polymerisation über die Messung der elektrischen Leitfähigkeit ist aus DE-A 41 08 047 bekannt.

Ein diskontinuierliches Verfahren zur Herstellung von THF-Copolymeren mit alpha,omega-Diolen in Gegenwart einer Heteropolysäure, ist aus der JP-A 10-87811 bekannt. Aus dem Polymerisationsreaktor wird dabei kontinuierlich ein Teil der Copolymerisationslösung entnommen und einem Verfahren zur Wasserabtrennung unterworfen. Nach 12 h wird die Polymerisation gestoppt. Für die beschriebene viermalige Wiederholung des Versuchs wird jedesmal frischer Katalysator verwendet. Dies ist unwirtschaftlich, da für jede neue Polymerisation frischer Katalysator getrocknet werden muss.

Es wurde festgestellt, dass sich die Heteropolysäure-Phase des Copolymerisationsansatzes je nach Dauer der Phasentrennung und Zeitaufwand für die Rückführung verändert. Viskosität und Farbe nehmen zu, was sich zum einen auf die Qualität des Polymerisationsproduktes, beispielsweise die Farbe des Endprodukts, andererseits auf die Eigenschaften der Heteropolysäure wie z.B. Pumpbarkeit, Emulgierbarkeit, Standzeit aber auch auf die katalytischen Eigenschaften, auswirkt.

Der vorliegenden Erfindung lag daher die Aufgabe zu Grunde, die Copolymerisation von THF mit alpha,omega-Diolen in Gegenwart von Heteropolysäuren einfacher und wirtschaftlicher zu gestalten, indem Copolymere eines bestimmten Molekulargewichts zur Verfügung gestellt werden können und eine Möglichkeit zur mehrfachen Verwendung bzw. Rückführung des Katalysators gefunden wird. Das neue Verfahren sollte zudem Polyoxyalkylenglykole mit Einbauraten des Diol-Comonomers von 5 bis 40 Gew.-%, bezogen auf das Copolymer ermöglichen.

Überraschenderweise wurde nun ein Verfahren zur einstufigen Herstellung von Polyoxyalkylenglykolen eines bestimmten Molekulargewichts durch Copolymerisation von Tetrahydrofuran (THF) und alpha,omega-Diolen als Comonomer in Gegenwart einer Heteropolysäure und eines Kohlenwasserstoffs gefunden, bei dem ein Gemisch aus Wasser und Kohlenwasserstoff aus der Copolymerisation abdestilliert wird, dadurch gekennzeichnet, dass bei Erreichen dieses Molekulargewichts die Polymerisation durch den Zusatz von Wasser abgebrochen wird.

Mit dem neuen Verfahren lassen sich THF-Copolymere eines bestimmten Molekulargewichts einfach und sicher darstellen. Durch die Verwendung von Wasser zum Abbruch der Copolymerisation wird nicht nur eine Synthese von THF Copolymeren bestimmter Molekulargewichte möglich, sondern es entsteht eine Heteropolysäure enthaltende Katalysatorphase die sich, beispielsweise durch Rückführung wieder verwenden lässt. Durch den erfindungsgemäßen Abbruch der Copolymerisation entsteht eine gleichsam stabilisierte Heteropolysäure, die auch bei längerer Zwischenlagerung farblos, stabil und katalytisch aktiv bleibt.

Zum Abbruch der Copolymerisation werden erfindungsgemäß 0,1 bis 20 Gew.-% an Wasser, bevorzugt 0,1 bis 10 Gew.-%, besonders bevorzugt 0,1 bis 5 Gew.-%, jeweils bezogen auf die für die Copolymerisation vor dem Abbruch der Copolymerisation bereits verwendete Gesamtmenge an Tetrahydrofuran, Comonomer und Heteropolysäure, bei Erreichen des gewünschten Molekulargewichts des Zielpolymers zugesetzt. Dabei kann die elektrische Leitfähigkeit des Copolymerisations-Ansatzes mit dem mittleren Molekulargewicht des entstehenden Polymeren korreliert werden. Somit besteht die Möglichkeit durch den gezielten Abbruch der Copolymerisation bei Erreichen eines bestimmten Wertes der Leitfähigkeit, das mittlere Molekulargewicht des entstehenden Copolymers gezielt und unter Einhaltung einer engen Molekulargewichtsverteilung festzulegen.

Die Messung der elektrischen Leitfähigkeit kann beispielsweise mit Hilfe der Techniken, Schaltungen und Messanordnungen, wie sie von T. und L. Shedlovsky in A. Weissberger, B.W. Rossiter (Ed.) Techniques of Chemistry, Band 1, Seite 163-204, Wiley-Interscience, New York, 1971, beschrieben sind, im erfindungsgemäßen Verfahren durchgeführt werden. Als Leitfähigkeitsmessgeräte und Leitfähigkeitsmesszellen können auch die im Handel erhältlichen Geräte und Elektroden zur Leitfähigkeitsmessung erfolgreich im erfindungsgemäßen Verfahren eingesetzt werden. Als Messelektroden können die üblichen Platin-Elektroden benutzt werden. Im Dauerbetrieb kann es vorkommen, dass die Elektroden sich im Laufe der Zeit mit Polymer oder Nebenprodukten der Polymerisationsreaktion belegen und dadurch die Messwerte verfälscht werden. Es ist daher zweckdienlich, die Funktion der Elektroden zu überprüfen und die Elektroden erforderlichenfalls zu reinigen.

Die Leitfähigkeit kann in der homogenen Reaktionsmischung, der Katalysatorphase, oder aber in der organischen Phase gemessen werden. Die letzteren beiden Möglichkeiten würden sich ergeben, wenn der Reaktor eine Ruhezone enthält, die eine Phasenseparation zulässt.

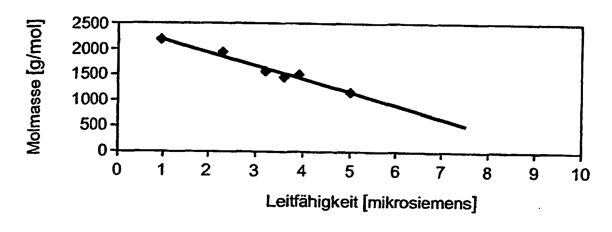

Der Wert der elektrischen Leitfähigkeit lässt sich mit dem mittleren Molekulargewicht des entstehenden Copolymeren korrelieren, ist jedoch stark temperaturabhängig und abhängig vom jeweils verwendeten organischen Kohlenwasserstoff (Schlepper). Dabei ergibt sich unter Berücksichtigung der jeweils verwendeten Heteropolysäure, THF des verwendeten Comonomers und der angewandten Polymerisationstemperatur eine praktisch lineare Beziehung zwischen der gemessenen elektrischen Leitfähigkeit und dem mittleren Molekulargewicht des gebildeten Polymeren. Eine solche Beziehung ist beispielhaft für das Reaktionssystem Dodecawolframatophosphorsäure/Neopentylglykol/THF/Wasser/Hexan bei einer Polymerisationstemperatur von 60°C in Fig. 1 dargestellt.

In dem erfindungsgemäßen Verfahren, mit dem THF-Copolymere eines mittleren Molekulargewichts von 1000 bis 2800 zugänglich sind, bedeutet dies einen Abbruch der Copolymerisation bei einer Leitfähigkeit zwischen 0,1-5 $\mu$S, bevorzugt zwischen 0,1 - 3 $\mu$S und besonders bevorzugt zwischen 0,1 - 2,5 $\mu$S. Zur besseren Stabilisierung der organischen Produktphase vor oxidativen Schädigung können dieser 10 - 500 ppm, besonders bevorzugt 50 - 300 ppm eines Radikalfängers zugegeben werden. Als Radikalfänger eignen sich besonders 250 ppm 2,6-Di-tert.-butyl-4-methyl-kresol (BHT).

Unter der Bezeichnung "mittleres Molekulargewicht" oder "mittlere Molmasse" wird in dieser Anmeldung das Zahlenmittel $M_n$ des Molekulargewichts der im gebildeten Polymerisat enthaltenen Copolymeren verstanden.

Die nach dem Abbruch der Copolymerisation durch Phasentrennung resultierende Katalysatorphase ist stabil und kann längere Zeit gelagert und nach Bedarf wieder neu für weitere Copolymerisationen eingesetzt werden. Eine aus einem vorangegangenen Versuch erhaltene Katalysatorphase kann im nächsten Copolymerisationsversuch erneut eingesetzt werden, muss jedoch vor dem Wiederansatz von dem zum Abbruch zugesetzten Wasser befreit werden. Dies kann beispielsweise durch Destillation erfolgen.

Bei der Copolymerisation von THF mit alpha, omega-Diolen wird Reaktionswasser frei. Da Wasser zum einen die Katalysatoraktivität negativ beeinflusst und zum anderen als Kettenabbruchsreagenz (sogenanntes "Telogen") wirkt, ist es notwendig, zur Erreichung eines bestimmten Molekulargewichts das Reaktionswasser sowie das Kristallwasser aus der Copolymerisationsstufe zu entfernen.

Die im erfindungsgemäßen Verfahren verwendeten Kohlenwasserstoffe sollen zur A-zeotropbildung mit Wasser geeignet sein. Als Kohlenwasserstoff werden zum Beispiel aliphatische oder cycloaliphatische Kohlenwasserstoffe mit 4 bis 12 C-Atomen oder - aromatische Kohlenwasserstoffe mit 6 bis 10 C-Atomen oder deren Gemische eingesetzt. Im Einzelnen sein z.B. Pentan, Hexan, Heptan, Octan, Decan, Cyclopentan, Cyclohexan, Benzol, Toluol, Xylol oder Naphthalin genannt, von denen Pentan, Cyclopentan, Hexan und Octan bevorzugt sind und Pentan besonders bevorzugt ist.

Die Kohlenwasserstoffe werden dem Copolymerisationsgemisch (bestehend aus THF und Neopentylglykol (NPG) zu Beginn der Reaktion in einer Menge von $1\times10^{-4}$ Gew.-% (entsprechend 1 ppm) bis 30 Gew-%, bezogen auf das Reaktionsgemisch aus alpha, omega-Diol und THF, bevorzugt 1 ppm bis 16 Gew.-%, besonders bevorzugt 1 ppm bis 10 Gew.%, zugegeben. Es ist jedoch auch möglich, den Kohlenwasserstoff in den Kopf der Destillationskolonne zur Abtrennung des Gemisches aus Kohlenwasserstoff und Wasser einzuleiten. Über die Gesamtmenge an Wasser, die aus der Copolymerisation ausgeschleust wird, kann das jeweilige Molgewicht eingestellt werden.

Als Comonomere werden alpha,omega-Diole außer 1,4-Butandiol wie zum Beispiel $C_2$- bis $C_{10}$-Alkandiole wie Ethylenglykol, Propylenglykol, 1,3-Propandiol, 1,3-Butandiol, 2-Methylbutandiol, 1,5-Pentandiol, 1,6-Hexandiol, Neopentylglykol, 3-Methyl-1,5-Pentandiol, 1,8-Octandiol, 1,10-Decandiol, Diethylenglykol, Triethylenglykol, niedermolekulare THF-Copolymere mit den hier genannten alpha, omega-Diolen mit einem mittleren Molekulargewicht von 200 bis 600 Dalton oder deren Gemische eingesetzt. Bevorzugt werden als Comonomere niedermolekulare Comonomere mit einem mittleren Molekulargewicht von 200 bis 600 Dalton und Neopentylglykol, besonders bevorzugt Neopentylglykol eingesetzt. 1,4-Butandiol ist kein Comonomer im Sinne dieser Erfindung, da es zum Homopolymer Polytetrahydrofuran führt und kein Copolymer ergibt.

Es können auch Gemische aus Tetrahydrofuran, Wasser und 2-Methylbutandiol eingesetzt werden, wobei der Anteil an 2-Methylbutandiol an derartigen Gemischen zwischen 100 ppm und 60 Gew.%, bezogen auf das Gemisch betragen kann.

Es werden erfindungsgemäß 1 bis 60 Gew.-% des alpha,omega-Diols bezogen auf das eingesetzt Tetrahydrofuran, bevorzugt 2 bis 40 Gew.%, besonders bevorzugt 3 bis 20 Gew.-% in die Copolymerisation eingesetzt.

Die Copolymerisation des THF mit alpha, omega-Diolen in Gegenwart von Heteropolysäuren als Katalysatoren erfolgt in an sich bekannter Weise, wie sie zum Beispiel in EP-A 126 471 beschrieben ist.

Heteropolysäuren, die erfindungsgemäß verwendet werden, sind anorganische Polysäuren, die im Gegensatz zu Isopolysäuren mindestens zwei verschiedene Zentralatome besitzen. Heteropolysäuren entstehen aus jeweils schwachen mehrbasigen Sauerstoffsäuren eines Metalles, wie Chrom, Molybdän, Vanadium und Wolfram sowie eines Nichtmetalles, wie Arsen, Jod, Phosphor, Selen, Silizium, Bor und Tellur als partielle gemischte Anhydride. Als Beispiele seine die Dodecawolframphosphorsäure $H_3(PW_{12}O_{40})$ oder die Decamolybdophosporsäure $H_3(PMo_{12}O_{40})$ genannt. Die Heteropolysäuren können als zweites Zentralatom auch Aktionoide oder Lanthanoide enthalten (s.Z. Chemie 17 (1977), Seiten 353 bis 357 bzw. 19 (1979), 308). Die Heteropolysäuren können allgemein durch die Formel $H_{8-n}(Y^nM_{19}O_{40})$ mit n = Wertigkeit des Elementes Y (z.B. Bor, Silizium, Zink) beschrieben werden (s. auch Heteropoly- und Isopoly-oxomtalates, Berlin; Springer 1983). Für das erfindungsgemäße Verfahren sind als Katalysatoren Phosphorwolframsäure, Phosphormolybdänsäure, Siliziummolybdänsäure und Siliziumwolframsäure besonders gut geeignet.

Die als Katalysatoren verwendeten Heteropolysäuren können sowohl getrocknet (1 bis 10 Mol Wasser/Mol Heteropolysäure) oder ungetrocknet (10 bis 40 Mol Wasser/Heteropolysäure) in der Copolymerisation verwendet werden.

Das im Copolymerisationsreaktor vorhandene Wasser, bei dem es sich zum Teil um Kristallwasser aus der Heteropolysäure und zum Teil um während der Reaktion entstandenes Wasser handelt, wird als Gemisch des mit dem Frischzulauf zugesetzten Kohlenwasserstoffs mit Wasser bei einer Temperatur von 40° bis 120°C, besonders bevorzugt von 50 bis 70°C und einem Druck von 150 mbar bis 2 bar, bevorzugt 230 mbar mit Hilfe einer üblichen Destillationseinrichtung direkt aus der Copolymerisation, das heißt aus dem Copolymerisationsreaktor ohne zwischengeschaltete Aufarbeitungsschritte wie Phasentrennungen, abgetrennt.

Der entstehende Brüden wird bevorzugt in einem Oberflächenkondensator niedergeschlagen; jedoch sind auch Quench und Einspritzkondensatoren möglich. Das anfallende Kondensat wird zur Auskreisung des Wassers der Lösemittelaufarbeitung zugeführt. Besonders günstig ist eine teilweise Rückführung des Kondensats in den Reaktor, d.h. eine Abführung der Reaktionswärme mittels Siedekühlung. Zur Erreichung möglichst hoher Wassergehalte im abzuziehenden Kondensat kann zwischen Reaktor und Kondensator noch eine mehrstufige, mit dem Rückführkondensat als Rücklauf beaufschlagte Gegenstrom-Rektifikationskolonne eingefügt sein.

In einer weiteren Ausführungsform wird gleichzeitig mit dem Gemisch des in die Copolymerisation eingesetzten Kohlenwasserstoffs mit Wasser THF abdestilliert, welches abhängig vom Kohlenwasserstoff ein temäres Azeotrop bilden kann.

Der im Gemisch mit Wasser abdestillierte Kohlenwasserstoff oder die Gemische von Wasser und Kohlenwasserstoff mit Tetrahydrofuran können mit einem geeigneten festen Adsorbtionsmittel, beispielsweise an Molekularsiebe getrocknet und erneut in die Copolymerisation zurückgeführt werden. Auch eine Phasentrennung in eine wässrige Phase und eine Kohlenwasserstoff-Phase ist denkbar. Die wässrige Phase enthält bis 5 Gew.-% an THF, bevorzugt < 1 Gew.-%. Ferner enthält sie in Konzentrationen < 1 Gew.- % den jeweiligen Kohlenwasserstoff. THF und der Kohlenwasserstoff können durch destillative Aufarbeitung der wässrigen Phase zurückgewonnen werden und zurückgeführt werden. Die wässrige Phase kann jedoch auch verworfen werden.

In der nach dem Abtrennen des Kohlenwasserstoff/Wasser-Gemisches verbliebene Copolymerisatlösung (enthaltend THF, Heteropolysäure und Copolymeres) wird die Leitfähigkeit bestimmt, bis der gewünschte Wert erreicht ist. Dann wird zum Abbruch der Copolymerisation die erfindungsgemäß erforderliche Menge an Wasser zugegeben. Danach wird die Copolymerisatlösung bevorzugt in einen Phasenscheider überführt. Durch Zugabe von weiteren Mengen an Kohlenwasserstoff trennt man die Heteropolysäure aus der Produktphase ab. Dieses an sich, beispielsweise aus EP-A 181 621 bekannte Verfahren führt zur Nachfällung der Heteropolysäure aus der organischen Phase. Als Kohlenwasserstoff wird bevorzugt der bereits in die Copolymerisation eingesetzte Kohlenwasserstoff verwendet.

Die obere organische Phase enthält die Hauptmenge des Copolymerisats und THF sowie geringe Restmengen an Heteropolysäure oder deren Folgeprodukten. Deren Anteil übersteigt in der Regel 0,03 Gew.-%, bezogen auf den Copolymerisationsaustrag, nicht. Dennoch wurde erkannt, dass diese Restmengen des Katalysators und seiner Folgeprodukte abgetrennt werden müssen, da sie die Eigenschaften der Copolymere zu deren Weiterverarbeitung nachteilig beeinflussen.

Die destillative Abtrennung des THF's vom Copolymerisat kann vor oder nach der Abtrennung der Katalysator-Anteile und/oder Katalysatorfolgeprodukte durch Filtration, wie zum Beispiel Ultrafiltration, Adsorption an festen Adsorptionsmitteln und/oder mit Hilfe von Ionentauschem erfolgen, wobei Filtration und Adsorption an festen Adsorptionsmitteln bevorzugt ist. Bevorzugt erfolgt die Filtration ohne vorherige Abtrennung des THF's durch Destillation.

Die Adsorption an den genannten festen Adsorptionsmittel kann auch mit einer Neutralisation des Polymerisationsaustrags durch Basen kombiniert werden. Als Basen kommen z.B. die Hydroxide und Carbonate der Alkali- und Erdalkalimetalle in Betracht.

Die Adsorption erfolgt bevorzugt an Aktivkohle und/oder Metalloxiden und/oder Ionentauschem bei Tempera-turen von 10 bis 75°C, bevorzugt bei 20°C bis 70°C. Besonders bevorzugt erfolgt die Abtrennung in Aufarbeitungsstufe a) an Ionenaustauschern und/oder Aktivkohle. Als Metalloxide finden bevorzugt Natriumhydroxid, Aluminiumoxid, Siliciumdioxid, Titandioxid, Zirkondioxid, Lanthanoxid und/oder Calciumoxid Verwendung.

Geeignete Aktivkohle kann beispielsweise von der Firma Merck, Darmstadt oder in Form des Handelsproduktes Aktivkohle Typ CPG UF 8x30 von der Firma Chemviron Carbon bezogen werden.

Geeignete Ionentauscher sind beispielsweise Anionentauscher wie das Handelsprodukt Lewatit® MP 600R, der von der Firma Bayer AG, Leverkusen, bezogen werden kann, gemischte Ionentauscher wie zum Beispiel das Handelsprodukt SerdolitR® , das von der Firma Serva, Heidelberg bezogen werden kann, oder Molekularsiebe mit Porengrößen von 3 bis 10 Å.

Die erfindungsgemäße Abtrennung der Katalysator-Anteile und/oder Katalysatorfolgeprodukte durch Adsorption an festen Adsorptionsmitteln wird bevorzugt im Festbett bei einer Belastung von im allgemeinen 0,2 bis 5 kg/l*h, insbesondere 0,4 bis 4 kg/l*h (kg Polymerisationsaustrag pro l Adsorptionsmittel pro Stunde), verwendet.

Das erfindungsgemäße Verfahren kann diskontinuierlich, in semi-batch Fahrweise oder kontinuierlich durchgeführt werden. Die bevorzugte Variante ist diskontinuierlich.

Bei kontinuierlicher Fahrweise wird frisches Monomer THF in Gegenwart von Wasser (0,1 - 5 Gew.%, bevorzugt 0,1- 3,5 Gew%, besonders bevorzugt 0,1 - 2 Gew.% THF, bezogen auf die Gesamtmenge an Monomer THF und Comonomer, beispielsweise Neopentylglykol, über eine Füllstandsregelung gesteuert, in den Reaktor eindosiert. Zweckmäßigerweise wird frische Zulauflösung in dem Maße zugeführt, wie Produkt und nicht umgesetztes Monomer aus der Reaktionsapparatur ausgetragen werden. Auf diese Weise kann auch die Verweilzeit, mithin die Polymerisationszeit, gesteuert werden, womit ein weiteres Mittel zur Beeinflussung und Einstellung des mittleren Molekulargewichts des entstehenden Polymeren zur Verfügung steht. Im Allgemeinen wird die Copolymerisation in Abhängigkeit von der Katalysatormenge und der Reaktionstemperatur beim chargenweisen Verfahren während eines Zeitraums von 0,5 bis 70 Stunden, vorzugsweise von 5 bis 50 Stunden und besonders bevorzugt von 10 bis 40 Stunden durchgeführt. Beim kontinuierlichen Verfahren werden üblicherweise Verweilzeiten von 1 bis 50 und vorzugsweise von 10 bis 40 Stunden eingestellt. Zu Beginn einer kontinuierlichen Umsetzung benötigt das beschriebene Reaktionssystem eine gewisse Zeit bis sich ein stationäres Gleichgewicht eingestellt hat und während der es vorteilhaft sein kann, den Reaktorauslass geschlossen zu halten, also keine Produktlösung aus der Reaktionsapparatur auszutragen. Mit Hilfe einer in die Copolymerisationslösung entstandenen Leitfähigkeitsmesszelle kann die Leitfähigkeit kontinuierlich gemessen werden.

Für die diskontinuierliche, halb-diskontinuierliche und kontinuierliche Fahrweise wird zweckmäßigerweise die Heteropolysäure in Mengen von 1 bis 300 Gew.-Teilen, vorzugsweise von 5 bis 150 Gew.-Teilen, bezogen auf 100 Gew.-Teile der verwendeten Monomeren (Monomere THF und Comonomer alpha,omega-Diole), eingesetzt. Es ist auch möglich größere Mengen an Heteropolysäure zum Reaktionsgemisch zu geben.

Die Heteropolysäure kann in fester Form der Umsetzung zugeführt werden, worauf sie durch das Inkontaktbringen mit den weiteren Reaktanten nach und nach unter Ausbildung der flüssigen Katalysatorphase geht. Man kann auch so verfahren, dass man die feste Heteropolysäure mit dem zu verwendenden alpha,omega Diol und/oder dem THF anmaischt und die dabei erhaltene Katalysatorlösung als flüssige Katalysatorphase in den Reaktor leitet. Dabei kann sowohl die Katalysatorphase als auch das monomere Ausgangsmaterial im Reaktor vorgelegt werden. Es können aber auch beide Komponenten gleichzeitig in den Reaktor eingeleitet werden.

Die Copolymerisation wird üblicherweise bei Temperaturen von 20 bis 100°C, vorzugsweise bei 30 bis 80°C vorgenommen. Vorteilhaft wird dabei unter Atmosphärendruck gearbeitet, die Umsetzung unter Druck, vornehmlich unter dem Eigendruck des Reaktionssystems, kann sich aber gleichfalls als zweckmäßig und vorteilhaft erweisen.

Die Reaktoren sollten sowohl bei der chargenweisen, der semi-batch-Fahrweise als auch bei der kontinuierlichen Verfahrensweise mit leistungsfähigen Mischeinrichtungen, beispielsweise Rührwerken, ausgestattet sein.

Als Reaktor sind alle dem Fachmann bekannten Flüssigreaktoren mit inerter oder/und externer freie Flüssigkeitsoberfläche zur notwendigen Abdampfung der wasserhaltigen Brüden, bei denen in der Flüssigkeit genügend hohe Scherkräfte zur Suspendierung der Katalysatorphase in der homogenen Monomer/Polymerphase erreicht werden, geeignet (Rührkessel, Umlaufreaktoren, Strahlschlaufe, pulsierte Einbauten). Eine besonders günstige Bauart ist die Ausführung als Strahlschlaufe, da hier die notwendige Temperierung des Reaktors auf einfache Weise in den Flüssigumlaufstrom integriert werden kann. Aus der Reaktionsmischung wird kontinuierlich oder diskontinuierlich das wasserhaltige Gemisch des Kohlenwasserstoffs abgedampft und der Wassergehalt des Reaktorinhaltes so auf reaktionstechnisch günstige Werte eingestellt.

Das erfindungsgemäße Verfahren wird vorteilhaft unter einer Inertgasatmosphäre durchgeführt, wobei beliebige Inertgase, wie Stickstoff oder Argon, verwendet werden können. Die Reaktanden werden vor ihrer Verwendung von gegebenenfalls darin enthaltenem Wasser und Peroxiden befreit.

Die Umsetzung kann in herkömmlichen, für kontinuierliche Verfahren geeigneten Reaktoren oder Reaktoranordnungen, beispielsweise in Rohrreaktoren, welche mit Innenausbauten ausgestattet sind, die eine gute Durchmischung des emulsionsartigen Copolymerisationsansatzes gewährleisten oder aber auch in Rührkesselkaskaden ausgeführt werden.

Nach dem erfindungsgemäßen Verfahren können Polyoxyalkylenglykole, insbesondere Copolymere von THF und Neopentylglykol, wirtschaftlich und in guter Ausbeute, selektiv und mit einer engen Molekulargewichtsverteilung sowie in reiner Form erhalten werden. Die Copolymere weisen Einbauraten des alpha,omega-Diol-Comonomers von 10 bis 50 Gew.-%, bezogen auf das Copolymer, und mittlere Molekulargewichte $M_n$ von 600 bis 6000 auf. Die erfindungsgemäß herstellbaren Polyoxyalkylenglykole finden beispielsweise zur Herstellung spezieller Polyurethane, die als hochelastische Verbundwerkstoffe geeignet sind. Ein Polyurethanpolymer, welches die erfindungsgemäß herstellbaren Copolymere beinhaltet, weist eine hohe Verlängerung nach dem Bruch, eine geringe Spannungsänderung bei Verlängerung, einen geringen Hystereseverlust beim Ausdehnen und Zusammenziehen sowie eine hohe Elastizität auch bei extremer Kälte auf.

Die folgenden Beispiele sollen den Gegenstand der Erfindung näher erläutern.

Beispiele

Bestimmung der Farbzahl

Die vom Lösungsmittel befreiten Polymer werden unbehandelt in einem Flüssigkeitsfarbmeßgerät LICO 200 der Fa. Dr. Lange vermessen. Es werden Präzisionsküvetten Typ Nr. 100-QS (Schichtdicke 50 mm, Fa. Helma) verwendet.

Bestimmung der OH-Zahl

Unter der Hydroxylzahl wird diejenige Menge an Kaliumhydroxid in mg verstanden, die der bei der Acetylierung von 1 g Substanz gebundenen Menge Essigsäure äquivalent ist.

Die Hydroxylzahl wird bestimmt durch die Veresterung der vorhandenen Hydroxylgruppen mit einem Überschuß an Essigsäureanhydrid. Nach der Umsetzung wird das überschüssige Essigsäureanhydrid mit Wasser hydrolysiert und als Essigsäure mit Natronlauge zurücktitriert.

Bestimmung Copolymerisationsverhältnis

Das Copolymerisäonsverhältnis wurde mit $^1$H-NMR mit einem Gerät der Fa. Bruker, Gerätetyp: dpx 400; 400 MHz, Log. Standard: Tetramethylsilan (TMS) unter Verwendung des Lösungsmittels $CDCl_3$ bestimmt.

Zur Berechnung der Einbaurate werden die Integrale I der Methylgruppensignale des Neopentylglykols (NPG) (0-8 - 1.1 ppm) und die der inneren $CH_2$-Gruppen der Polytetrahydrofuran-Einheiten (1.4 - 2.0 ppm) herangezogen:

$$\frac{I_{NPG} \times 4}{I_{THF} \times 6} = \text{Einbaurate}$$

Bestimmung der Leitfähigkeit

Elektrode: LTA 01 Glas/Platin 2-Elektrodenmeßzelle, K ca. 0,1 cm-1; Firma Knick Konduktometer (Auswerteeinheit): Knick 702 Firma WTW

Das Messgerät berechnet aus dem gemessenen Strom auf Grundlage des Ohm'schen Gesetzes zunächst den Leitwert der Messlösung und - unter Einbeziehung der Zellkonstante - den Leitfähigkeitswert. Der Temperaturabgleich erfolgt manuell an der Auswerteeinheit.

Beispiel 1

In einem 21 doppelwandigen Reaktor mit einer Magnetrührvorrichtung und angeschlossener Destillationskolonne (50 cm) mit kombiniertem Wasserabscheider wurde ein Gemisch aus 800 g THF, 48 g Neopentylglykol und 50 g Pentan zu einer homogenen Lösung verrührt. Dazu wurden unter Rühren 197 g einer hydratisierten Dodecaphosphorwolframsäure ($H_3PW_{12}O_{40}$ * × $H_2O$ mit x = 20 - 40 ex Firma Merck), gegeben. Die Temperatur des Heizmediums (Öl) wurde auf 94°C eingestellt. Die Reaktionstemperatur wurde auf 65°C gehalten. Die Leitfähigkeit betrug beim Start der Copolymerisation 150 $\mu$S.

Das während der Reaktion abdampfende THF/Pentan/Wassergemisch wurde in der Kolonne aufgetrennt. Das Pentan/Wasser-Gemisch wird über Kopf genommen, und im Wasserabscheider kondensiert. Der Sumpf der Kolonne besteht hauptsächlich aus THF und wird in die Polymerisationsstufe zurückgeführt. Das Pentan-Wasser-Gemisch zerfällt in zwei Phasen, wobei die obere organische Phase in den Kopf der Kolonne zurückläuft. Die untere Wasserphase wird verworfen. Während der Reaktion wurden 19 g Wasser abgetrennt.

Nach 22 h wurde die Reaktion bei einer Leitfähigkeit von 2,1 $\mu$S durch Zugabe von 5 g Wasser und 250 ppm 2,6-Di-tert.-butyl-p-kresol (BHT) und 600g Hexan abgebrochen. Nach erfolgter Phasentrennung wird die untere wässrige Katalysatorphase (236 g) abgelassen und drei Tage gelagert.

Die obere Phase (809 g) wurde bei 20°C über ein Festbett, gefüllt mit einem Anionentauscher (Volumen: 1 l) der Marke Bayer Lewatit® MP 600 R, geleitet.

Danach wurde THF und Heptan am Rotationsverdampfer bei 140°C und einem Druck von 20 mbar abgetrennt und ein Copolymeres mit einer OH-Zahl von 60 mg KOH/g Copolymer erhalten. Die NPG-Einbaurate beträgt 11,4 mol%. Weitere Daten sind Tabelle 1 zu entnehmen.

Beispiel 2

Die aus Beispiel 1 abgetrennte wässerige Heteropolysäure-Phase wird in Versuch 2 eingesetzt.

Die Anfangsleitfähigkeit beträgt 42 μS. Nach 18 h Laufzeit und einer Leitfähigkeit von 2,1 μS wird die Reaktion abgebrochen. Die Aufarbeitung liefert 236 g einer wässerigen HPA-Phase. Weitere Daten sind in Tabelle 1 aufgelistet.

Vergleichsbeispiel V1

Die aus Beispiel 2 abgetrennte wässrige Heteropolysäure-Phase wird in Vergleichsbeispiel 1 eingesetzt. Die Anfangsleitfähigke'rt beträgt 27 μS. Nach 22 h Laufzeit und einer Leitfähigkeit von 2,1 μS wird die Reaktion durch Abschalten von Heizung und Rührer abgebrochen

Die Aufarbeitung liefert 240 g einer wässrigen HPA-Phase die drei Tage gelagert wird. Weitere Daten sind in Tabelle 1 aufgelistet. Die zurückgewonnene Heteropolysäure-Phase wurde nach 3 Tagen fest, war nicht mehr rückführbar und nicht mehr einsetzbar. Die Farbe der Heteropolysäure-Phase veränderte sich von farblos nach dunkelblau.

| Bsp - | THF [g] | NPG [g] | HPA[1] - Phase [g] | Temp. [°C] | Laufzeit [h] | Zugabe von Wasser bei Reaktionsende [g] | Leitfähigkeit [$\mu$S] | EDR [%] | OH- Zahl | Einbau NPG [mol%] | Farbzahl |
|---|---|---|---|---|---|---|---|---|---|---|---|
| 1 | 800 | 48 | 197* | 65 | 21 | 5 | 2,1 | 34 | 60 | 11,4 | 10 |
| 2 | 800 | 48 | 236 | 65 | 18 | 10 | 2,2 | 32,5 | 62 | 11,8 | 9 |
| V1 | 800 | 48 | 236 | 65 | 22 | - | 2,1 | 33,6 | 63 | 12,2 | 10 |

[1] HPA = Heteropolysäure
EDR = Eindampfrückstand

Beispiel 3

In einem 1 l doppelwandigen Reaktor mit einer Magnetrührvorrichtung und angeschlossener Destillationskolonne (50 cm) mit kombiniertem Wasserabscheider wurde ein Gemisch aus 590 g THF, 30 g Neopentylglykol und 60 g Hexan zu einer homogenen Lösung verrührt. Dazu wurden unter Rühren 150 g einer hydratisierten Dodecaphosphorwolframsäure ($H_3PW_{12}O_{40}$ * $\times$ $H_2O$ mit x = 20 - 40 ex Firma Merck), gegeben. Die Temperatur des Heizmediums (Öl) wurde auf 94°C eingestellt. Die Reaktionstemperatur wurde auf 65°C gehalten.

Das während der Reaktion abdampfende THF/Hexan/Wassergemisch wurde in der Kolonne aufgetrennt. Das Hexan/Wasser-Gemisch wird über Kopf genommen, und im Wasserabscheider kondensiert. Der Sumpf der Kolonne besteht hauptsächlich aus THF und wird in die Polymerisationsstufe zurückgeführt. Das Hexan-Wasser-Gemisch zerfällt in zwei Phasen, wobei die obere organische Phase in den Kopf der Kolonne zurückläuft. Die untere Wasserphase wird verworfen. Während der Reaktion wurden 20,7 g Wasser abgetrennt.

Nach 19 h wurde die Reaktion bei einer Leitfähigkeit von 3,2 $\mu$S durch Zugabe von 5 g Wasser und 250 ppm 2,6-Di-tert.-butyl-p-kresol (BHT) und 600g Hexan abgebrochen. Nach erfolgter Phasentrennung wird die untere wässrige Katalysatorphase (208 g) abgelassen und drei Tage gelagert.

Die obere Phase (475 g) wurde bei 20°C über ein Festbett, gefüllt mit einem Anionentauscher (Volumen: 1 l) der Marke Bayer Lewatit® MP 600 R, geleitet.

Danach wurde THF und Heptan am Rotationsverdampfer bei 140°C und einem Druck von 20 mbar abgetrennt und ein Copolymeres mit einer OH-Zahl von 70 mg KOH/g Copolymer erhalten. Weitere Daten sind Tabelle 2 zu entnehmen.

Beispiel 4

Die aus Beispiel 3 abgetrennte wässerige Heteropolysäure-Phase wird in Versuch 4 eingesetzt.

Nach 24 h Laufzeit und einer Leitfähigkeit von 3,6 $\mu$S wird die Reaktion durch Zugabe von 5 g Wasser abgebrochen. Die Aufarbeitung liefert 199 g einer wässerigen HPA-Phase.

Vergleichsbeispiel 2

Die aus Beispiel 4 abgetrennte wässerige Heteropolysäure-Phase wird in Vergleichsbeispiel 2 eingesetzt. Nach 25 h Laufzeit und einer Leitfähigkeit von 2,3 $\mu$S wird die Reaktion ohne Zugabe von Wasser durch Abstellung der Heizung abgebrochen. Die Aufarbeitung liefert 170 g einer wässerigen HPA-Phase.

Die zurückgewonnene Heteropolysäure-Phase wurde nach 3 Tagen fest, war nicht mehr rückführbar und nicht mehr einsetzbar. Die Farbe der Heteropolysäure-Phase veränderte sich von farblos nach dunkelblau.

Weitere Daten sind in Tabelle 2 aufgelistet.

| Bsp. | THF [g] | NPG [g] | HPA[1]-Phase [g] | Temp. [°C] | Laufzeit [h] | Zugabe von Wasser bei Reaktionsende [g] | Leitfähigkeit [$\mu$S] | EDR [%] | OH-Zahl |
|------|---------|---------|------------------|------------|--------------|------------------------------------------|-------------------------|---------|---------|
| 3 | 590 | 30 | 150* | 65 | 19 | 5 | 3,2 | 30,0 | 70 |
| 4 | 590 | 30 | 199 | 65 | 24 | 5 | 3,6 | 29,6 | 75 |
| V2 | 590 | 30 | 169 | 65 | 25 | - | 2,3 | 33,4 | 58 |
| [1] HPA = Heteropolysäure EDR = Eindampfrückstand | | | | | | | | | |

**Patentansprüche**

1. Verfahren zur einstufigen Herstellung von Polyoxylalkylenglykolen eines Molekulargewichts von 1000 bis 2800 durch Copolymerisation von Tetrahydrofuran und alpha, omega-Diolen mit Ausnahme von 1,4-Butandiol als Comonomer in Gegenwart einer Heteropolysäure und eines Kohlenwasserstoffs, bei dem ein Gemisch aus Wasser und diesem Kohlenwasserstoff aus der Copolymerisation abdestilliert wird, **dadurch gekennzeichnet, dass** beim Erreichen dieses Molekulargewichts die Polymerisation durch den Zusatz von Wasser abgebrochen wird.

2. Verfahren nach Anspruch 1, **dadurch gekennzeichnet, dass** zwischen 0,1 - 10 Gew.% an Wasser, bezogen auf die für Copolymerisation bereits verwendete Gesamtmenge an Tetrahydrofuran, Comonomer und Heteropolysäure, zugesetzt wird.

3. Verfahren nach einem der Ansprüche 1 oder 2, **dadurch gekennzeichnet, dass** man das Erreichen des Molekulargewichts durch die Messung der elektrischen Leitfähigkeit des Copolymerisationsansatzes bestimmt.

4. Verfahren nach einem der Ansprüche 1 bis 3, **dadurch gekennzeichnet, dass** der Wasserzusatz bei einer Leitfähigkeit von 0,1 bis 5 µS erfolgt

5. Verfahren nach einem der Ansprüche 1 bis 4, **dadurch gekennzeichnet, dass** Neopentylglykol als alpha, omega-Diol verwendet wird.

**Claims**

1. A process for preparing polyoxyalkylene glycols of a molecular weight of from 1000 to 2800 in one stage by copolymerizing tetrahydrofuran and alpha,omega-diols with the exception of 1,4-butanediol as the comonomer in the presence of a heteropolyacid and of a hydrocarbon, by distilling off a mixture of water and this hydrocarbon from the copolymerization, which comprises terminating the polymerization when this molecular weight is attained by adding water.

2. The process according to claim 1, wherein between 0.1 and 10% by weight of water, based on the total amount of tetrahydrofuran, comonomer and heteropolyacid already used for the copolymerization, is added.

3. The process according to either of claims 1 or 2, wherein the attainment of the molecular weight is determined by measuring the electrical conductivity of the copolymerization mixture.

4. The process according to any of claims 1 to 3, wherein the water is added at a conductivity of from 0.1 to 5 µS.

5. The process according to any of claims 1 to 4, wherein the alpha,omega-diol used is neopentyl glycol.

**Revendications**

1. Procédé de préparation en une étape de polyoxyalkylène glycols d'un poids moléculaire de 1000 à 2800, par copolymérisation de tétrahydrofuranne et d'α,ω-diols, à l'exception du 1,4-butanediol en tant que comonomères, en présence d'un hétéropolyacide et d'un hydrocarbure, et dans lequel on élimine de la copolymérisation, par distillation, un mélange d'eau et de cet hydrocarbure, **caractérisé en ce que**, une fois atteint ce poids moléculaire, la polymérisation est interrompue par addition d'eau.

2. Procédé selon la revendication 1, **caractérisé en ce que** l'on ajoute de 0,1 à 10% en poids d'eau, par rapport à la quantité totale de tétrahydrofuranne, de comonomères et d'hétéropolyacide déjà utilisée pour la copolymérisation.

3. Procédé selon l'une quelconque des revendications 1 ou 2, **caractérisé en ce que** l'on détermine l'obtention du poids moléculaire par mesure de la conductibilité électrique de la charge de copolymérisation.

4. Procédé selon l'une quelconque des revendications 1 à 3, **caractérisé en ce que** l'addition d'eau a lieu à une valeur de conductibilité électrique de 0,1 à 5 µS.

5. Procédé selon l'une quelconque des revendications 1 à 4, **caractérisé en ce que** l'on utilise du néopentylglycol en tant qu'α,ω-diol.